# EUROPÄISCHE PATENTSCHRIFT

(11) **EP 2 131 061 B1**
(45) Veröffentlichungstag und Bekanntmachung des Hinweises auf die Patenterteilung: **05.09.2012**
(21) Anmeldenummer: 09005907.2
(22) Anmeldetag: 29.04.2009
(51) Int. Cl.: F16F 9/42

(54) **Hydropneumatische Dämpfereinrichtung**
Hydropneumatic damper device
Dispositif d'amortissement hydropneumatique

(30) Priorität: 04.06.2008 DE 102008026680
(43) Veröffentlichungstag der Anmeldung: 09.12.2009
(73) Patentinhaber: Rheinmetall Landsysteme GmbH, 24107 Kiel (DE)
(72) Erfinder: Freier, Christian, 24111 Kiel (DE); Leiber, Florian, 24326 Dersau (DE)
(74) Vertreter: Dietrich, Barbara

(56) Entgegenhaltungen:
- DE-A1- 2 456 002
- DE-A1- 2 809 177
- JP-A- 8 177 935
- US-A- 4 629 169

## Beschreibung

Die Erfindung betrifft eine hydropneumatische Dämpfereinrichtung, insbesondere für Kraftfahrzeuge, mit einem hydropneumatischen Feder-Dämpferelement.

Hydropneumatische Feder-Dämpferelemente, die auch als Hydrop oder Hydropelemente bezeichnet werden, dienen vorwiegend zur Schwingungsdämpfung schwerer Geländefahrzeuge. Sie bestehen im Wesentlichen aus einem als Feder wirkenden Gasvolumen und einem mit dem Gasvolumen zusammenwirkenden Öldämpfer. Hierzu kann in einem gemeinsamen zylinderförmigen Gehäuse ein Zwischenkolben vorgesehen sein, welcher das Gasvolumen von dem ölgefüllten Hydraulikvolumen trennt, so dass eine von der Position des Zwischenkolbens abhängige Federwirkung der Gasfüllung erfolgt. In dem Hydraulikvolumen befindet sich ein mit einer Kolbenstange verbundener Arbeitskolben, welcher üblicherweise Drosselbohrungen enthält, so dass beim Fahren des entsprechenden Fahrzeuges über Unebenheiten das durch den Arbeitskolben komprimierte Öl durch die Drosselbohrungen in einen Niederdruckbereich des Hydraulikvolumens gepresst wird und sich eine geschwindigkeitsabhängige Dämpfungskraft ergibt.

Die DE 103 28 541 A1 beschreibt ein derartiges Hydropelement und die Verwendung in einem Fahrzeug mit Laufwerk und Laufwerksrollen. Dieses Element zeichnet sich dadurch aus, dass es eine Vorwärmeinrichtung besitzt, wodurch vor dem Fahrbetrieb mittels dem Hydropelement die Kettenspannung entsprechend eingestellt werden kann, so dass auf einen hydraulischen Kettenspanner verzichtet werden kann.

Ein weiteres Hydropelement ist der DE 203 20 565 U1 entnehmbar. Das hydropneumatische Element besteht u. a. aus einem hydropneumatischen Federelement mit einem Feder- und Dämpfungselement, aufweisend einen Hydraulikzylinder, einen Hauptkolben, einen Trennkolben sowie ein Dämpfungselement, welches zwischen dem Hauptkolben und dem Trennkolben platziert ist.

Insbesondere bei der Verwendung von hydropneumatischen Feder-Dämpferelementen in militärischen Gleiskettenfahrzeugen entsteht in diesen Dämpferelementen relativ viel Wärme. Zur Beseitigung dieser Wärme ist bereits vorgeschlagen worden, dass für das hydropneumatische Feder-Dämpferelemente benötigte Hydrauliköl in einem entsprechenden Kühlkreis zu kühlen.

Als nachteilig hat sich dabei erwiesen, dass hierzu separate ÖI-Umlaufpumpen erforderlich sind, welche die Kosten derartiger Anlagen erhöhen und außerdem einen hohen Platzbedarf sowie eine wesentliche Erhöhung des Gewichtes der Dämpfereinrichtungen zur Folge haben.

Der Erfindung liegt die Aufgabe zugrunde, eine einfache, betriebssichere und kostengünstige hydropneumatische Dämpfereinrichtung anzugeben, bei deren bestimmungsgemäßen Verwendung eine Erwärmung des hydropneumatischen Feder-Dämpferelementes weitgehend vermieden wird.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im Wesentlichen auf dem Gedanken, als ÖI-Umlaufpumpe für den Kühlkreis des Hydrauliköles das hydropneumatische Feder-Dämpferelement selbst heranzuziehen. Hierzu ist das Hydraulikvolumen des Feder-Dämpferelementes über zwei Rückschlagventile mit einer Rohrleitung verbunden, welche ihrerseits durch ein Kühlelement kühlbar ist. Durch die bei Fahrt eines entsprechenden Fahrzeuges erfolgenden zurückfedernden Bewegungen des Arbeitskolbens des hydropneumatischen Feder-Dämpferelementes wird aus dem Hydraulikvolumen des Dämpferelementes Hydrauliköl entnommen bzw. zugeführt. Diesem Hydrauliköl wird dann durch ein beispielsweise an der Wanne des Fahrzeuges befestigtes Kühlelement Wärme entzogen.

Vorgeschlagen wird eine direkte passive Kühlung des Hydrauliköls unter Nutzung des Hydropelements als Ölumlaufpumpe.

Weitere Einzelheiten und Vorteile der Erfindung ergeben sich aus dem folgenden, anhand einer Zeichnung erläuterten Ausführungsbeispiel.

Es zeigt
- Fig. 1: schematisch eine hydropneumatische Dämpfereinrichtung,
- Fig. 2: eine Einfedern aus statischer Lage der Dämpfereinrichtung,
- Fig. 3: eine eingefederte Lage der Dämpfereinrichtung,

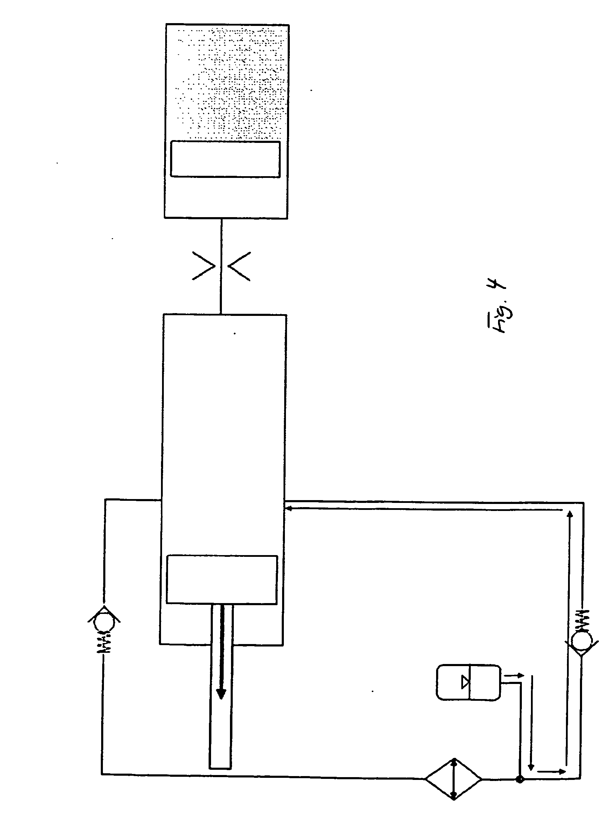

- Fig. 4: eine ausfedernde Lage der Dämpfereinrichtung.

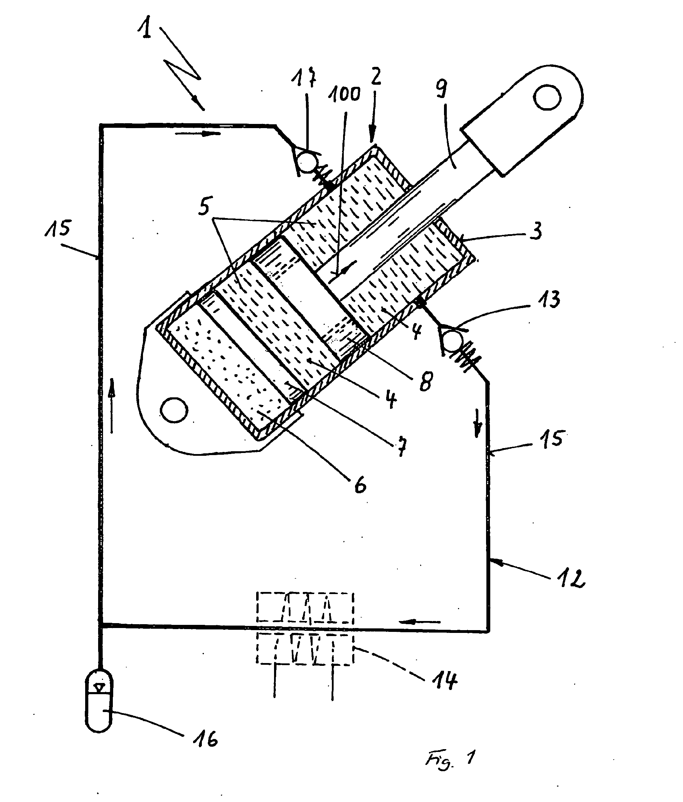

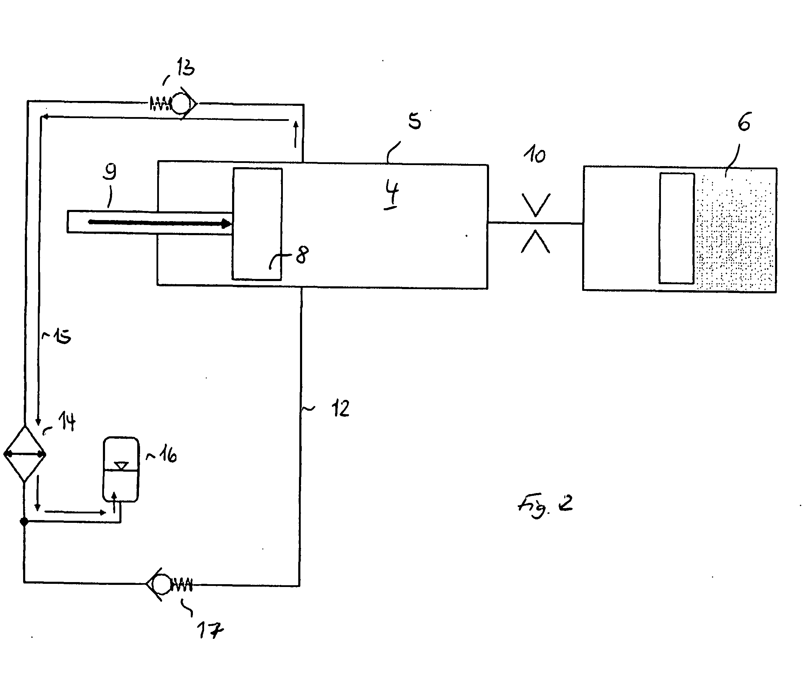

In der Fig. 1 ist mit 1 schematisch eine erfindungsgemäße hydropneumatische Dämpfereinrichtung für ein Gleißkettenfahrzeug (nicht näher dargestellt) bezeichnet. Die Dämpfereinrichtung 1 enthält ein hydropneumatisches Feder-Dämpferelement 2, welches ein Gehäuse 3 umfasst, in dem sich ein mit Öl 4 gefülltes Hydraulikvolumen 5 und ein als Feder wirkendes Gaspolster 6 befindet. Dabei sind das Gaspolster 6 und das Hydraulikvolumen 5 beispielsweise durch einen axial verschiebbaren Zwischenkolben 7 oder durch eine Drossel 10 (Fig. 2) getrennt. In dem Hydraulikvolumen 5 befindet sich ein Arbeitskolben 8, der mit einer Kolbenstange 9 verbunden ist.

Erfindungsgemäß ist nun vorgesehen, dass das Hydraulikvolumen 5 des hydropneumatischen Feder-Dämpferelementes 2 Teil eines geschlossenen Kühlkreises 12 zur Kühlung des in dem Hydraulikvolumen 5 verwendeten Hydrauliköles 4 ist. Hierzu ist das Hydraulikvolumen 5 über ein erstes Rückschlagventil 13 mit einer von einem Kühlelement 14 gekühlten Rohrleitung 15 sowie einem Druckspeicher 16 verbunden. Die Rohrleitung 15 ist dabei nach Passieren des Kühlelementes 14 über ein zweites Rückschlagventil 17 wieder mit dem Hydraulikvolumen 5 verbunden. Als Umlaufpumpe, die das Hydrauliköl 4 bei der Fahrt eines entsprechenden Fahrzeuges durch die Rohrleitung 15 befördert, dient das hydropneumatische Feder-Dämpferelement 2 selbst.

Nachfolgend wird näher auf die Wirkungsweise der erfindungsgemäßen hydropneumatischen Dämpfereinrichtung 1 eingegangen.

Der Kolben 8 bewegt sich in Einfederrichtung (Fig. 2). Dabei wird das Öl 4 verdrängt. Es öffnet das Rückschlagventil 13 und fließt über den Kühlkörper 14 in den Druckspeicher 16. Der Druck im Hydropelement 2 und der Druckspeicher 16 befinden sich stets im Gleichgewicht.

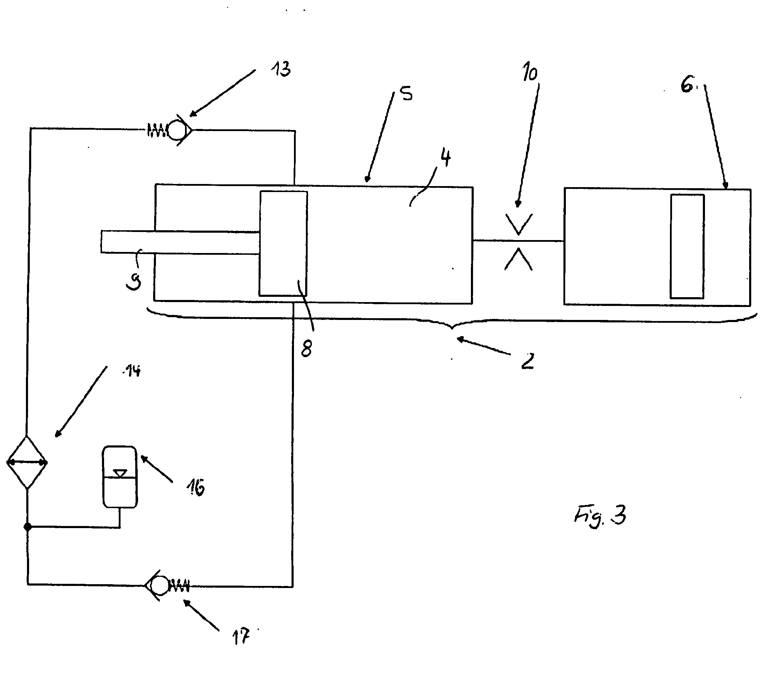

Beim Einfedern (Fig. 3) ist der Kolben 8 so weit eingefedert, dass er die beiden Rohrleitungen verdeckt. Es fließt kein Öl 4, beide Rückschlagventile 13, 17 sind geschlossen. Das Hydropelement 2 wirkt bei weiterer Einfederung wie ein unmodifiziertes Hydropelement.

Beim Ausfedern bewegt sich der Kolben 8 in Ausfederrichtung. Der Druck im Hydropelement 2 nimmt stetig ab. Sind die Rohrleitungen nicht vom Kolben 8 bedeckt und ist der Druck im Druckspeicher 16 größer als im Hydropelement 2, wird das zweite Rückschlagventil 17 geöffnet und es fließt Öl 4 aus dem Druckspeicher 16 zurück in den hydraulischen Dämpfer 5 des Hydropelements 2.

Durch diese Anordnung entsteht ein Kühlkreislauf, so dass das entnommene Öl 4 ausreichend lange gekühlt werden kann, bevor es zurück in das Hydropelement 2 gespeist wird.

Die Erfindung ist selbstverständlich nicht auf das vorstehend beschriebene Ausführungsbeispiel beschränkt. So kann auf ein separates Kühlelement verzichtet werden, wenn die Rohrleitung 15 beispielsweise in einem Teilbereich an der kalten Wanne des Gleißkettenfahrzeuges befestigt ist, so dass die Wanne selbst als Kühlelement wirkt.

Des Weiteren ist es möglich, auch im vom Druckspeicher 16 abfließenden Kreis zum Hydropelement 2 hin einen kühlenden Körper, beispielsweise eine Rohrleitung entsprechend der Rohrleitung 15, einzubinden.

### Bezugszeichenliste

- 1: hydropneumatische Dämpfereinrichtung
- 2: hydropneumatisches Feder-Dämpferelement
- 3: Gehäuse
- 4: Öl, Hydrauliköl
- 5: Hydraulikvolumen
- 6: Gaspolster
- 7: Zwischenkolben
- 8: Arbeitskolben
- 9: Kolbenstange
- 10: Drossel

- 12: Kühlkreis
- 13: erstes Rückschlagventil
- 14: Kühlelement
- 15: Rohrleitung
- 16: Druckspeicher
- 17: zweites Rückschlagventil

- 100: Pfeil / in Einfederrichtung

## Patentansprüche

1. Hydropneumatische Dämpfereinrichtung (1), insbesondere für Kraftfahrzeuge, mit einem hydropneumatischen Feder-Dämpferelement (2), welches zumindest ein Gehäuse (3) umfasst, in dem sich ein mit Öl (4) gefüllten Hydraulikvolumen (5) und ein als Feder wirkendes Gaspolster (6) befinden, mit den Merkmalen:
- das Hydraulikvolumen (5) des hydropneumatischen Feder-Dämpferelementes (2) ist Teil eines Kühlkreises (12) zur Kühlung des in dem Hydraulikvolumen (5) verwendeten Hydrauliköles (4),
- der Kühlkreis (12) besitzt wenigstens zwei Rückschlagventile (13, 17) sowie wenigstens einen Druckspeicher (16) und wenigstens einen, das Öl (4) kühlbaren Körper (15),
- das Hydraulikvolumen (5) ist über das erste Rückschlagventil (13) als auch dem zweiten Rückschlagventil (17) mit dem kühlbaren Körper (15) verbindbar, wobei
- das Öl (4) beim Einfedern über den kühlbaren Körper (15) in den Druckspeicher (16) über das erste Rückschlagventil (13) und beim Ausfedern aus dem Druckspeicher (16) über das zweite Rückschlagventil (17) gelangt.

2. Hydropneumatische Dämpfereinrichtung nach Anspruch 1, **dadurch gekennzeichnet, dass** das hydropneumatische Feder-Dämpferelement (2) als eine durch die Federbewegung des Gaspolsters (6) angetriebene Kolbenpumpe ausgebildet ist und den Umlauf des Hydrauliköles (4) in dem Kühlkreis (12) bewirkt.

3. Hydropneumatische Dämpfereinrichtung nach Anspruch 1 oder 2, **dadurch gekennzeichnet, dass** der Kühlkreis (12) einen weiteren, das Öl (4) auch im zurückfließenden Kreis kühlbaren Körper aufweisen kann.

4. Hydropneumatische Dämpfereinrichtung nach einem der Ansprüche 1 bis 3, **dadurch gekennzeichnet, dass** als kühlender Körper (15) eine kühlbare Rohrleitung vorgesehen ist.

5. Hydropneumatische Dämpfereinrichtung nach Anspruch 4, **dadurch gekennzeichnet, dass** die Rohrleitung (15) beispielsweise in einem Teilbereich an der kalten Wanne eines Gleiskettenfahrzeuges befestigt ist, so dass die Wanne selbst als Kühlelement wirkt.

## Claims

1. Hydropneumatic damper device (1), in particular for motor vehicles, comprising a hydropneumatic spring-damper element (2) which includes at least a housing (3) in which a hydraulic volume (5) filled with oil (4) and a gas cushion (6) acting as a spring are located, and having the features:
- the hydraulic volume (5) of the hydropneumatic spring-damper element (2) forms part of a cooling circuit (12) for cooling the hydraulic oil (4) used in the hydraulic volume (5),
- the cooling circuit (12) includes at least two non-return valves (13, 17), at least one pressure accumulator (16) and at least one coolable body (15) for the oil (4),
- the hydraulic volume (5) is connectable to the coolable body (15) via the first non-return valve (13) and also via the second non-return valve (17), whereby
- upon deflection the oil (4) enters the pressure accumulator (16) via the coolable body (15) and via the first non-return valve (13) and upon rebound leaves the pressure accumulator (16) via the second non-return valve (17).

2. Hydropneumatic damper device according to Claim 1, **characterized in that** the hydropneumatic spring-damper element (2) is configured as a piston pump driven by the spring movement of the gas cushion (6) and causes the hydraulic oil (4) to circulate in the cooling circuit (12).

3. Hydropneumatic damper device according to Claim 1 or 2, **characterized in that** the cooling circuit (12) may also include a further coolable body, for the oil (4) in the return-flow circuit.

4. Hydropneumatic damper device according to any one of Claims 1 to 3, **characterized in that** a coolable pipe line is provided as the cooling body (15).

5. Hydropneumatic damper device according to Claim 4, **characterized in that** the pipe line (15) is, for example, fastened in a partial region to the cold tub of a tracked vehicle, so that the tub itself acts as the cooling element.

## Revendications

1. Dispositif d'amortissement hydropneumatique (1), en particulier pour véhicules automobiles, comprenant un élément amortisseur à ressort hydropneumatique (2) qui comprend au moins un boîtier (3) dans lequel se trouvent un volume hydraulique (5) rempli d'huile (4) et un coussin de gaz (6) agissant en tant que ressort, comprenant les caractéristiques suivantes :
- le volume hydraulique (5) de l'élément amortisseur à ressort hydropneumatique (2) fait partie d'un circuit de refroidissement (12) pour le refroidissement de l'huile hydraulique (4) utilisée dans le volume hydraulique (5),
- le circuit de refroidissement (12) possède au moins deux clapets anti-retour (13, 17) ainsi qu'au moins un accumulateur de pression (16) et au moins un corps (15) pouvant refroidir l'huile (4),
- le volume hydraulique (5) peut être connecté par le biais du premier clapet anti-retour (13) ainsi que par le biais du deuxième clapet anti-retour (17) au corps de refroidissement (15),
- l'huile (4), lors de la compression par ressort par le biais du corps de refroidissement (15), parvenant dans l'accumulateur de pression (16) par le biais du premier clapet anti-retour (13) et lors du débattement du ressort, parvenant hors de l'accumulateur de pression (16) par le biais du deuxième clapet anti-retour (17).

2. Dispositif d'amortissement hydropneumatique selon la revendication 1, **caractérisé en ce que** l'élément amortisseur à ressort hydropneumatique (2) est réalisé sous forme de pompe à piston entraînée par le mouvement de ressort du coussin de gaz (6), et cause la circulation de l'huile hydraulique (4) dans le circuit de refroidissement (12).

3. Dispositif d'amortissement hydropneumatique selon la revendication 1 ou 2, **caractérisé en ce que** le circuit de refroidissement (12) peut présenter un corps supplémentaire pouvant refroidir l'huile (4), également dans le circuit de retour.

4. Dispositif d'amortissement hydropneumatique selon l'une quelconque des revendications 1 à 3, **caractérisé en ce que** l'on prévoit comme corps de refroidissement (15) une conduite tubulaire pouvant être refroidie.

5. Dispositif d'amortissement hydropneumatique selon la revendication 4, **caractérisé en ce que** la conduite tubulaire (15) est fixée par exemple dans une région partielle au carter froid d'un véhicule à chenilles, de sorte que le carter serve lui-même d'élément de refroidissement.
